# EUROPEAN PATENT APPLICATION

(11) **EP 2 441 328 A1**
(43) Date of publication of application: **18.04.2012**
(21) Application number: 11185200.0
(22) Date of filing: 14.10.2011
(51) Int. Cl.: A01K 1/015

(54) **Stable for animals, preferably bovine**

(30) Priority: 15.10.2010 IT PC20100021
(71) Applicant: Officina Marazzi di Scrollavezza Andrea, 29010 Gragnano Trebbiense (PC) (IT)
(72) Inventor: Scrollavezza, Andrea, 29010 Gragnano Trebbiense (PC) (IT)
(74) Representative: Fisauli, Beatrice A. M.

(57) **Abstract**

The invention refers to a barn for housing animals, and preferably for cattle, comprising:
- a first upper level (6a) containing at least one bedding area (2), where the animals can rest, and at least one feeding area (3) for the animals, accessible from the said bedding area (2);
characterised in that it comprises a second, lower level (6b) situated underneath the first level (6a) and separated from said first level (6a) by flooring (7) that is at least partially perforated; said second level (6b) being divided into at least a pair of communicating sectors (15) by at least one vertical partition (16), and said flooring (7) being at least partially covered with a bedding material (10).

## Description

The present invention relates to a barn for housing animals, and preferably for cattle.

The present invention is applicable in particular to the livestock breeding sector, and particularly to the housing of cattle.

According to the known state of the art, there are two main types of barn for housing cattle, i.e. in separate stalls or in deep litter barns.

Both the former and the latter are divided into two areas that each serve a different function: one area is for resting and moving about, i.e. an area designed to contain the animals mainly during the hours when they at rest; the other area is for feeding, i.e. an area occupied by the animals mainly while they are feeding. These two areas may be joined together or separated by gates or similar means, with suitable passages to enable the animals to move from one area to the other. For both solutions, moreover, in the feeding area there may be suitable channels or cavities for collecting the animals' excrement, which are periodically emptied and cleaned by means of suitable pumping systems, or by hand.

In the former type of housing solution with individual stalls, there are actually single spaces (albeit of limited size) separated by hinged barriers or similar means, and distinguishable from the areas allowing freedom of movement, where the animals go to rest.

While this solution enables an optimal use of the surface area of the barn, making it possible to contain a larger number of animals, it is not very comfortable for the livestock and this has a negative fallout on their health, as confirmed by numerous veterinary experts.

The second type, i.e. the deep litter barn, consists of a single area used for both moving about and resting, called the bedding area.

The bedding area is usually covered with layer of straw and other materials that make the area warmer and more comfortable for the animals, and for the time being this appears to be the most appropriate solution for ensuring the animals' comfort and health.

This second type of barn has several disadvantages, however.

In the bedding area of the barn, the animals are free to empty their bowels without there being any control over their movements, or opportunity to remove their solid or liquid excrement.

This excrement, as well as other dirt and humidity consequently impregnate the floor and the straw, making it necessary to clean the barn out frequently, which also obliges the farmer to repeatedly remove all the bedding material and completely replace the straw.

In this setting, the object of the present invention is a barn for animals, and preferably for cattle, that overcomes the drawbacks of the above-described known state of the art.

A particular object of the present invention is to provide a barn for housing animals, and preferably for cattle, that requires a limited amount of maintenance and reduces the frequency of cleaning procedures.

A further object of the present invention is to provide a barn that is more comfortable for the animals housed therein and, at the same time, that allows for a reduction in the time and cost of its maintenance and cleaning.

The above-stated technical aim and objects are substantially achieved by a barn for housing animals, and preferably for cattle, comprising:
- a first, upper level with a bedding area where the animals can rest and another area where the animals can eat, accessible from the bedding area, characterised in that it comprises a second, lower level situated underneath the first level and separated from said first level by at least partially perforated flooring, said second level being divided into at least a pair of communicating sectors by at least one vertical partition, and said flooring being covered at least partially with a covering material.

In detail, said second level extends underneath said bedding area at least, and preferably underneath the whole of the first level.

Due to the openings in the perforated flooring, the animals' solid and liquid excrement drops from the first level to the second level underneath, where it is collected for subsequent disposal, thus preventing the covering material, which generally consists of straw or the like, from being soiled excessively.

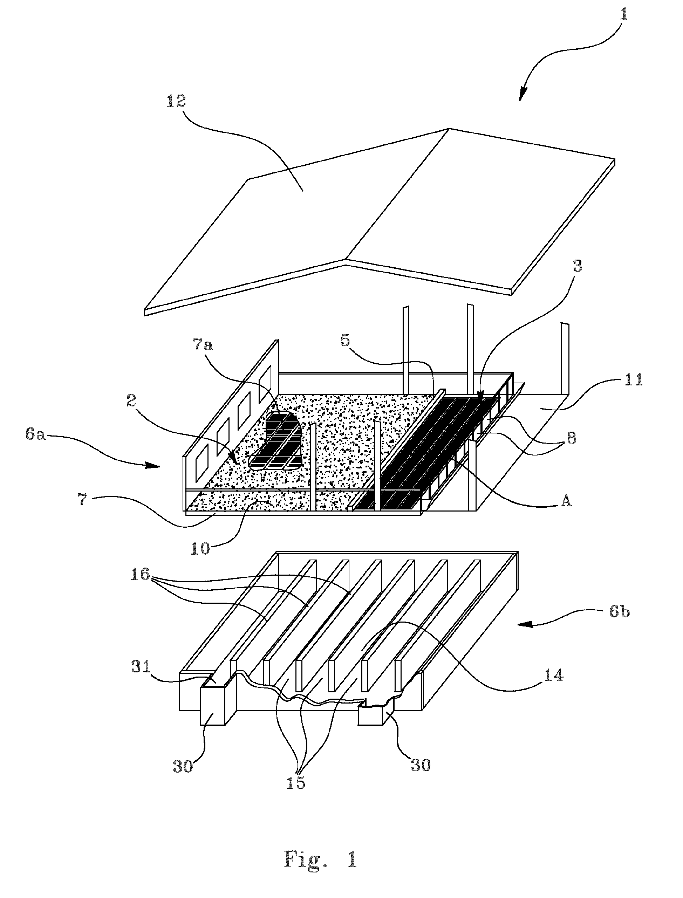

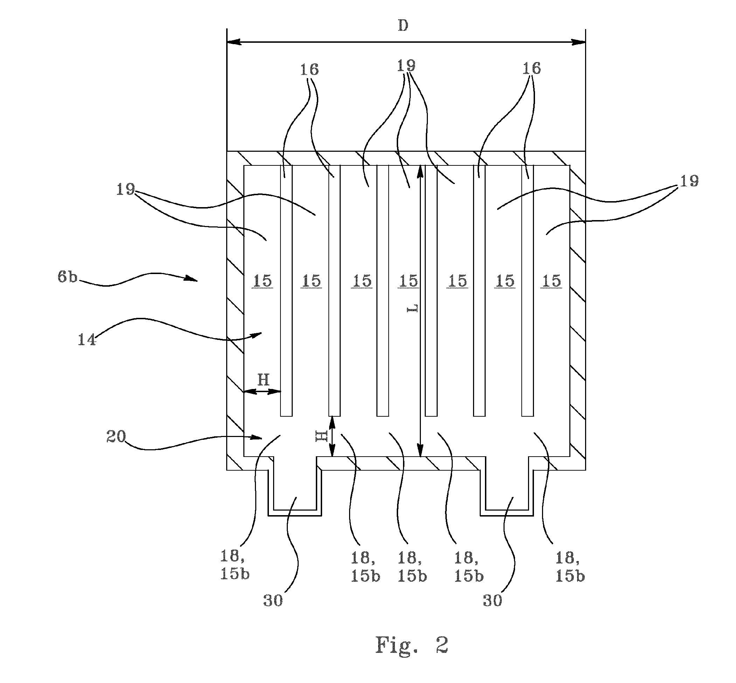

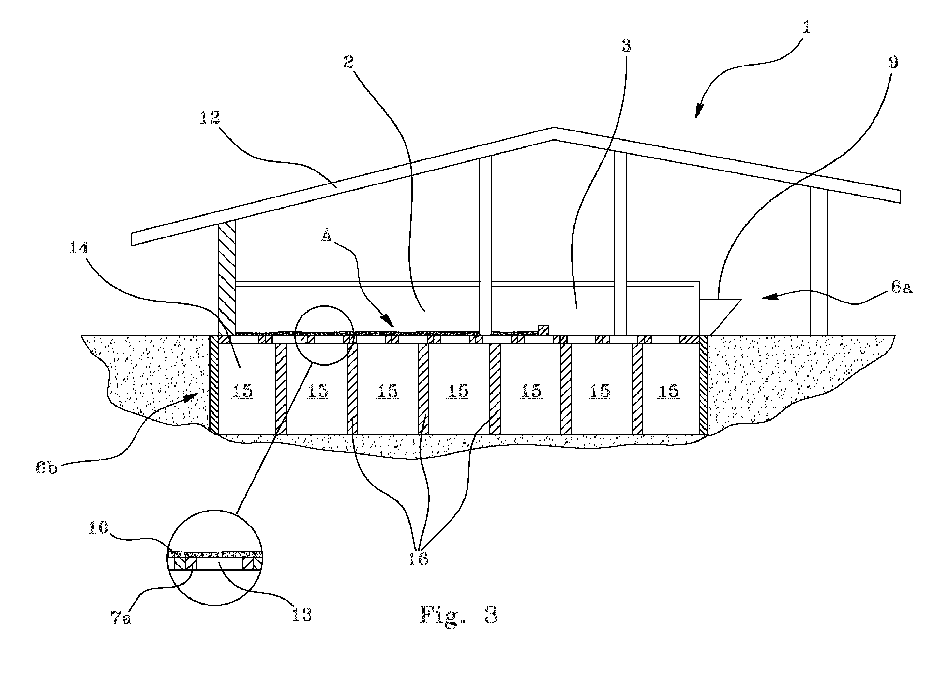

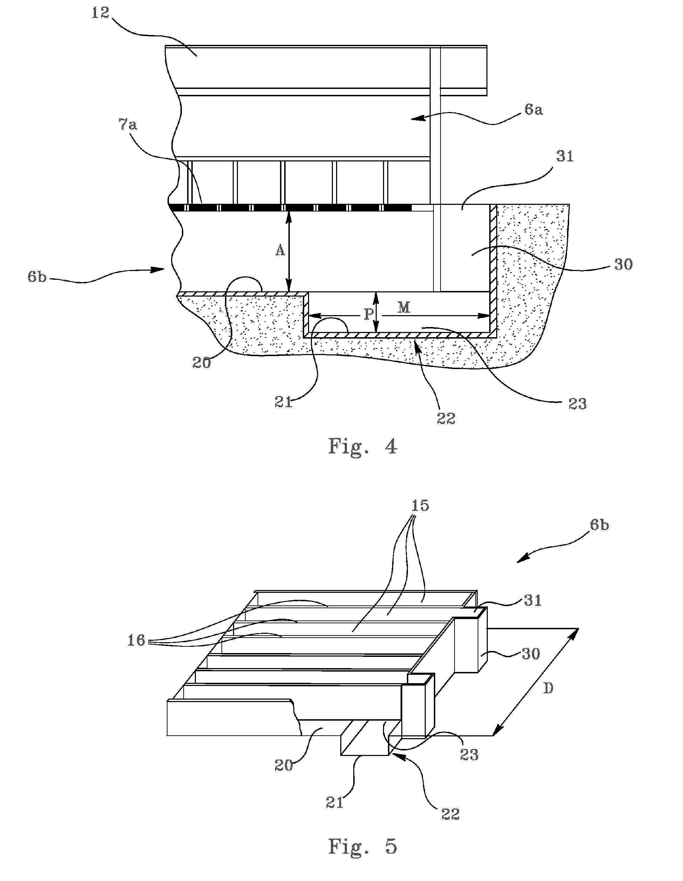

The fluid communication between the upper level and the lower level means that an air circulation is guaranteed, which keeps the covering material dry and thus keeps the animals more comfortable and ensures a higher standard of hygiene. Further characteristics and advantages of the present invention will emerge more clearly from the description given below as a non-limiting example of a preferred, but not exclusive embodiment of a barn for housing animals, and preferably for cattle, as illustrated in the attached drawings, wherein:
● figure 1 is an exploded view of the barn for housing animals, and preferably for cattle, according to the invention;
● figure 2 is a cross-sectional view on a horizontal cross-sectional plane of the barn shown in figure 1;
● figure 3 is a cross-sectional view on a vertical cross-sectional plane of the barn shown in figure 1;
● figure 4 is a cross-sectional view on a longitudinal vertical plane of a portion of the barn for housing animals, and preferably for cattle, according to another embodiment;
● figure 5 is a perspective view of the second, lower level of the barn shown in figure 4.

With reference to the attached figures, the numeral 1 indicates a barn for housing animals, and preferably for cattle, according to the present invention.

The barn 1 is arranged substantially on two levels, preferably with a first, upper level 6a and a second, lower level 6b overlapping one another.

The first level 6a is preferably on ground level and is divided into at least two areas.

In the embodiment illustrated, the first level 6a comprises a bedding area 2 and a feeding area 3, which may be joined into one or kept separate by gates or similar means, or preferably separated by a low wall 5 (as shown in the figure).

The bedding area 2 and the feeding area 3 can each be accessed from the other, however, by means of said wall 5 over which the animals can easily step. Depending on its size and shape, the barn may also include several bedding areas 2 with respective feeding areas 3, separated from one another by gates, railings or the like.

The bedding area 2 is preferably in the form of a substantially flat space surrounded by a plurality of walls or side gates, where the animals, and preferably cattle, are housed mainly during the hours when they sleep and/or rest.

The feeding area 3 may be entirely free, as in the example shown in the figure, or divided into a plurality of stalls by a plurality of substantially parallel, hinged barriers or vertical sides placed one alongside the other.

Said feeding area is located along one side of the perimeter of the barn, where a plurality of openings 8 face onto a trough 9, positioned along a feeding lane 11, where the animals can eat undisturbed.

Said bedding area 2 and said feeding area 3 thus form a shelf "A", where the animals can stand and move around, which is preferably at least partially covered with a bedding material 10 that keeps the animals as comfortable as possible. More in detail, said bedding material 10 covers the portion of the shelf A occupied by the bedding area 2, while the feeding area 3 remains uncovered to dissuade the animals from lying there and preventing others from accessing the trough. Said bedding material may preferably consist, for instance, of straw, and preferably obtained from wheat and/or rice, corn or barley stalks, or the like. According to one variant (not shown in the figure), the flooring of said feeding area 3 is on a slightly higher level than the bedding area 2. This difference in height between the two surfaces forms a step that helps to contain said bedding material within the bedding area, preventing it from spreading into the feeding area as well. More precisely, the shelf "A" is defined by a flooring 7 that extends substantially over the whole surface area of the barn, i.e. the bedding area 2 and the feeding area 3.

The first level 6a is preferably covered with a roof 12 for protecting the animals from the weather.

The second level 6b is situated underneath the first level 6a, and preferably below ground level, and it is separated from said first level 6a by the above-mentioned flooring 7.

In other words, the barn 1 extends over two floors that at least partially overlap with one another for the reasons explained below.

In particular, the second level 6b lies, preferably in its entirety, underneath at least the bedding area 2.

The second level 6b also lies underneath the feeding area 3.

In the embodiment illustrated, the second level 6b extends underneath the whole of the first level 6a.

In other words, the first and the second levels cover a substantially equivalent surface area.

While the first level 6a serves for the animals to live in, the second level forms a collection pit 14 where the animals' excrement is deposited.

For this purpose, the flooring 7 is at least partially perforated.

In other words, the flooring 7 has a plurality of through openings 13, that place the first level 6a in fluid communication with the second level 6b.

This advantageously enables the passage of the excrement from the first level 6a to the second level 6b, preventing it from soiling excessively the areas where the animals are housed.

The flooring 7 is preferably at least partially removable.

More precisely, the flooring 7 comprises a plurality of removable modules 7a that are arranged side-by-side to define the above-mentioned shelf "A".

These modules 7a are preferably square in shape and are installed on the bottom of the first level 6a, preferably resting on suitable partitions and beams.

During cleaning procedures, the animals are advantageously taken out of the barn 1 and the modules 7a are removed to facilitate access to the collection pit below.

It is worth noting that, because the collection pit 14 is in fluid communication with the bedding area 2, this advantageously enables air to circulate between the two and thereby create a flow of air that keeps the bedding area and the layer of bedding material 10 constantly dry.

Given the above, the straw or other bedding material can be used for lengthy periods of time without any need for it to be frequently replaced.

The second level 6b is preferably divided into at least a pair of sectors 15 communicating by means of at least one vertical partition 16.

In other words, the collection pit 14 where the excrement collects is divided into at least two compartments that are placed in communication by a suitable passage. More precisely, the two sectors 15 run one alongside the other along the second level 6b and are placed in communication by a connecting opening 15b.

This advantageously enables the excrement to be circulated from one sector to the adjacent sector with the aid of suitable pumps.

The second level preferably contains a plurality of sectors 15 lying one alongside the other, and all communicating with one another.

More in detail, during the cleaning procedure, a pump (not shown) is installed astride two sectors 15 to induce the circulation of the sewage between the two sectors 15 involved in order to dissolve the layer of excrement that has become dry on the surface and thereby facilitate its removal.

In the embodiment illustrated, the collection pit 14 for collecting the excrement is substantially square in shape and has a first dimension "L" and a second dimension "D", that are substantially orthogonal.

These dimensions L and D can clearly vary considerably because they depend on the size of the barn.

The vertical partitions 16 are substantially walls that extend longitudinally along the first dimension "L" of the collection pit 14, running parallel to one another.

In other words, each sector 15 forms a corridor 19 extending along the first dimension "L" of the collection pit 14 and has a predefined width "H".

More precisely, according to a first embodiment, the vertical partitions 16 extend side by side over a length L-H such that, between one sector 15 and the adjacent sector 15, there is a passage 18 with a width "H" that corresponds to the width of the sector 15 (figs. 1 and 2).

Two adjacent sectors 15 thus define a substantially U-shaped path of substantially constant width.

This advantageously facilitates the circulation of the sewage between one sector 15 and the next during the cleaning procedure, preventing the dried material lying on the surface from giving rise to clogging or creating "bottlenecks".

The dimension H is preferably at least 2 m in order to ensure a good circulation of the sewage during the cleaning procedure.

Said dimension H is preferably in the range of 3 m to 4 m.

In particular, coinciding with each partition 16, there is a passage 18 forming an extension of the collection pit 14 along the first dimension L.

The passages 18 consequently come to be facing one another and aligned along the second dimension "D" of the collection pit 14, defining a further crosswise corridor 20, preferably orthogonal to the corridors 19 defined by the sectors 15.

At least one corridor 15 and/or the further corridor 20 are arranged in the vicinity of a milking hall (not shown in the figure), generally adjacent to the barn 1.

This advantageously enables the washing and rinsing water from the milking hall to be reused, by transferring it inside the collection pit 14 to dilute the sewage and facilitate the cleaning and emptying of said collection pit.

In another embodiment (not shown), the sectors communicate two by two in order to create a compulsory path for the sewage when the previously-mentioned pump is in operation.

In other words, the collection pit in said embodiment is divided into a plurality of compartments that are separated from one another and substantially form a U-shape.

To enable a better air circulation through the second level 6b, this level preferably includes one or more cavities 30, designed to contain ventilation means (not shown in the figure).

Said cavity is positioned so as to coincide with one of the sides of the pit 6b and to be in communication therewith.

In practice, said cavity serves as a vent for entraining air from inside the second level 6b and expelling it outside through an opening 31 located on ground level at least, or on a higher level.

With reference to figures 4 and 5 attached, according to another embodiment, the flooring 20 of the second level 6b includes, in line with one side parallel to the dimension D, a portion 21 lying at a lower depth.

Said portion 21 preferably extends along the whole of one side of the barn over a length approximately corresponding to the dimension D.

According to this embodiment, the vertical partitions 16 extend substantially over the length L of the pit 6b at a substantially constant height A.

Thus, coinciding with said portion 21 of the flooring, there is a channel 22 that extends over a length corresponding to D underneath the level of the flooring 20. More in detail, said channel has a depth P ranging from 1 m e 2m and a width M ranging from 2m e 3,5m.

Each sector 15 is consequently placed in communication with the sector adjacent thereto by means of a passage 23 aligned with said vertical partitions 16 and presenting a cross-section substantially identical to that of the channel 22 contained therein.

The operating principle is the same as the one described previously for the first embodiment illustrated.

In the same way, therefore, suitable pumps can be used to make the excrement circulate from one sector to the one adjacent thereto.

In this case, said excrement passes through the passage 23.

The invention achieves the stated objects and offers important advantages.

The presence of a second level underneath the first level and communicating therewith enables an air circulation to be maintained that keeps the bedding material in the bedding area dry, making it more comfortable for the animals and also more hygienic.

Moreover, the presence of the collection pit underneath both the feeding area and the bedding area enables the animals' excrement to be removed from all areas of the barn, and therefore keeping it cleaner.

Another advantage of this solution is that it considerably reduces the frequency with which the barn needs to be cleaned, the excrement removed, and the straw or other bedding material replaced, assuring the farmer considerable economic savings.

In addition, the presence of the partitions and the modular flooring makes it particularly easy to remove the sewage from the collection pit with the aid of suitable pumps.

The animal barn as described and illustrated above may be susceptible to numerous modifications and variants, all coming within the scope of the inventive concept; all the details may also be replaced by other, technically equivalent components.

## Claims

1. A barn for housing animals, and preferably for cattle, comprising:
- a first, upper level (6a) containing at least one bedding area (2), where the animals can rest and at least one feeding area (3) for the animals, accessible from the bedding area (2);
**characterised in that** it comprises a second lower level (6b) situated underneath the first level (6a) and separated from said first level (6a) by flooring (7) that is at least partially perforated; said second level (6b) being divided into at least a pair of communicating sectors (15) by at least one vertical partition (16), and said flooring (7) being at least partially covered with a bedding material (10).

2. A barn according to claim 1, **characterised in that** the second level (6b) extends at least underneath the whole of the bedding area (2).

3. A barn according to claim 1, **characterised in that** the second level (6b) extends at least underneath the whole of the bedding area (2) and the feeding area (3).

4. A barn according to any of the previous claims, **characterised in that** said flooring (7) comprises a plurality of removable modules (7a).

5. A barn according to any of the previous claims, **characterised in that** the second level (6b) comprises a plurality of said vertical partitions (16) lying parallel to one another and dividing said second level (6b) into a plurality of sectors (15) that lie side by side.

6. A barn according to claim 5, **characterised in that** the sectors (15) are placed in communication with one another by passages (18, 23).

7. A barn according to claim 5 or 6, **characterised in that** each of the sectors (15) into which the second level (6b) is divided has a width H and a length L, each vertical partition (16) extending over a length L-H such that each pair of sectors (16) forms a substantially U-shaped path of substantially constant width.

8. A barn according to claim 6, **characterised in that**, coinciding with one side (D) of said flooring (20) of said second level (6b), there is a portion (21) located on a lower level, said portion (21) defining a channel (22) extending substantially over the full length of said side (D), and said passages (23) being contained inside said channel and aligned with said vertical partitions (16).

9. A barn according to claim 8, **characterised in that**, said channel (22) has a depth (P) ranging from 1 m e 2m and a width (M) ranging from 2m e 3,5m.

10. A barn according to any of the previous claims, **characterised in that** said second level (6b) also comprises one or more cavities (30), communicating therewith and located in line with one of its sides, said cavities being designed to contain ventilation means.

11. A barn according to any of the previous claims, **characterised in that** said bedding material consists at least of straw from wheat or rice, corn stalks or the like.
